# EUROPÄISCHE PATENTANMELDUNG

(11) **EP 1 707 652 A1**
(43) Veröffentlichungstag der Anmeldung: **04.10.2006**
(21) Anmeldenummer: 05007096.0
(22) Anmeldetag: 31.03.2005
(51) Int. Cl.: C23C 28/00, C23C 30/00, F01D 5/28

(54) **Matrix und Schichtsystem**

(71) Anmelder: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Steinbach, Jan, Dr., 13353 Berlin (DE)

(57) **Zusammenfassung**

Schutzschichten nach dem Stand der Technik erreichen ihre Schutzfunktion dadurch, dass sie an einem bestimmten Element verarmen, das eine schützende Oxidschicht bildet oder als Opfermaterial verbraucht wird. Wenn dieses Material verbraucht ist, kann die Schutzfunktion nicht mehr aufrechterhalten werden.

Erfindungsgemäß werden Fasern verwendet, die ein Depot an dem sich verbrauchenden Material enthalten, das verzögert abgegeben wird. Dies wird dadurch erreicht, dass dieses Material von einer Hülle (4) umgeben ist. Die Fasern erhöhen gleichzeitig die mechanische Festigkeit.

## Beschreibung

Die Erfindung betrifft ein Bauteil oder eine Schicht gemäß Anspruch 1 und eine Schichtsystem gemäß Anspruch 25.

Bauteile für Hochtemperaturanwendungen, beispielsweise Turbinenschaufeln und Brennkammerwände von Gasturbinen, weisen Schutzschichten gegen Oxidation und Korrosion auf. Solche Schichten sind beispielsweise aus einer Legierung des Typs MCrAlX, wobei sich auf dieser MCrAlX-Schicht eine schützende Aluminiumoxid-Schicht bildet. Dabei diffundiert das Aluminium aus der MCrAIX-Legierung an die Oberfläche der MCrAlX-Schicht, sodass die Legierung an dem Element Aluminium verarmt.
Ein vorbeugend überhöhter Anteil an Aluminium in der MCrAlX-Legierung von Anfang an führt aber zu schlechteren mechanischen Eigenschaften.

Außerdem sind Kompressorschaufeln bekannt, die mit Schutzschichten gegen Korrosion und Erosion versehen sind.
Diese weisen bei der Herstellung einen anorganischen Binder mit einem Metall auf, wobei das Metall als galvanisches Opferelement dient und daher elektrisch leitend mit dem Substrat des Bauteils verbunden ist. Eine Zusammensetzung einer solchen Schutzschicht ist aus der EP 0 142 418 B1 bekannt. Auch hier besteht das Problem darin, dass sich das Metall mit der Zeit verbraucht, so dass die Schutzfunktion nicht mehr erfüllt wird.

Schichten weisen oft nicht die erforderliche Festigkeit auf, wenn sich die Zusammensetzung ändert.

Ummantelte keramische Pulverteilchen sind aus der US 4,741,973 bekannt.

Fasern zur Verstärkung von Bauteilen oder Schichten sind ebenfalls bekannt.

Die EP 0 933 448 B1 offenbart Oxidteilchen in einer Schicht aus einem Aluminid.

Es ist daher Aufgabe der Erfindung eine Matrix für ein Bauteil oder eine Schicht und ein Schichtsystem aufzuzeigen, die eine längere Schutzfunktion und bessere mechanische Eigenschaften aufweisen.

Die Aufgabe wird gelöst durch eine Matrix gemäß Anspruch 1 und ein Schichtsystem gemäß Anspruch 25.

In den jeweiligen Unteransprüchen sind weitere vorteilhafte Maßnahmen aufgelistet, die beliebig miteinander in vorteilhafter Art und Weise miteinander kombiniert werden können.

Es zeigen
- Figur 1: eine Faser im Querschnitt,
- Figur 2, 3: erfindungsgemäße Schichten,
- Figur 4: eine Turbinenschaufel,
- Figur 5: eine Brennkammer und
- Figur 6: eine Gasturbine.

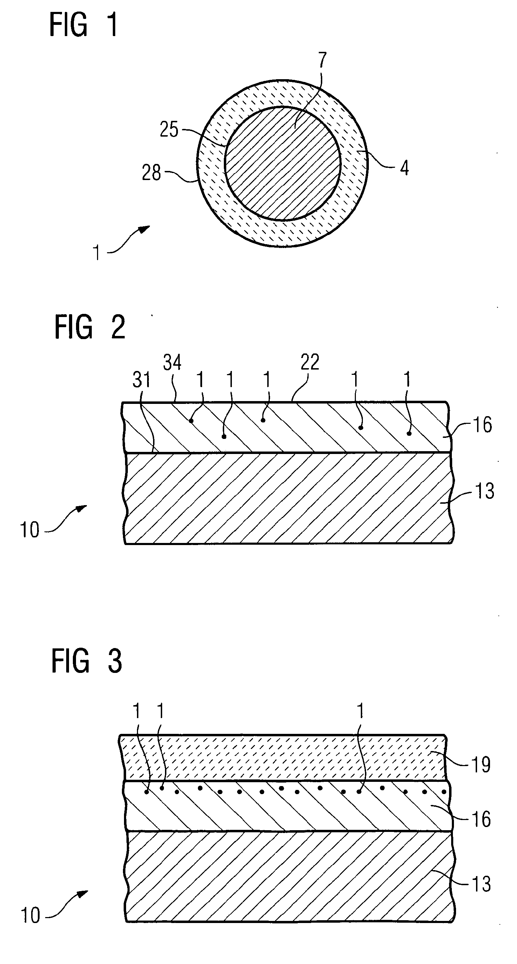

Figur 1 zeigt im Querschnitt eine Faser (Kurz- oder Langfaser) 1 für die erfindungsgemäße Matrix.
Die Faser 1 weist einen Kern 7 aus einem ersten chemischen Element oder einer ersten Verbindung auf.
Eine Verbindung besteht aus mehreren chemischen Elementen. Der Kern 7 kann aus einem Metall, einer Organik (organische Verbindung), Keramik oder einem Glas bestehen.
Der Kern 7 ist von einer Hülle 4 umgeben, die den Kern 7 zumindest teilweise, insbesondere ganz umhüllt.

Der Durchmesser des Kerns 7 kann im Mikro, Submikro (>1µm)-oder Nanobereich (≤ 500nm) liegen. Langfasern können auch in Form von Fasermatten erfindungsgemäß verwendet werden.
Das erste Element kann metallisch sein und ist vorzugsweise Aluminium (Al).
Ebenso kann das erste Element Chrom (Cr), eine Aluminium-Chrom-Legierung oder ein Aluminid sein. Ebenso kann der Kern 7 ein Gemisch aus zwei Metallen (beispielsweise Chrom und Aluminium) sein, die ggf. eine Legierung bilden können, aber nicht legiert sind.
Unter dem Begriff metallisch sollen auch Legierungen verstanden werden.
Weitere Beispiele für das erste Element sind Eisen (Fe), Titan (Ti) Platin (Pt), Yttrium (Y), Zink (Zn), Zinn (Sn) und/oder Kupfer (Cu).

Die Hülle 4 besteht aus einem zweiten chemischen Element oder einer zweiten Verbindung.

Die zweite Verbindung, also das Material der Hülle 4, ist beispielsweise eine Organik oder eine Keramik und ist insbesondere Aluminiumoxid und/oder Chromoxid oder ein Metalloxid wie Eisenoxid, Titanoxid oder eine organische Verbindung wie z.B. Si-O-C.

Die Faser 1 ist insbesondere aus einem Polysiloxan-Harz hergestellt. Polysiloxan-Harze sind polymer keramische Vorstufen der Strukturformel XSiO_{1,5}, wobei X = -CH₃, -CH, - CH₂, -C₆Hₛ etc. sein kann. Gezogene Fasern werden thermisch vernetzt, wobei anorganische Bestandteile (Si-O-Si-Ketten) und organische Seitenketten überwiegend aus X nebeneinander vorliegen. Anschließend werden die Fasern 1 über eine Temperaturbehandlung in Ar, N₂, Luft- oder Vakuum-Atmosphäre bei Temperaturen zwischen 600°C und 1200°C keramisiert. Dabei wird das polymere Netzwerk zersetzt und über thermische Zwischenstufen von amorphen bis kristalline Phasen neu strukturiert, wobei ausgehend von Polysiloxan-Vorstufen ein Si-O-C-Netzwerk entsteht.
Fasern 1 können auch von Vorstufen des Typs Polysilan (Si-Si), Polycarbosilan (Si-C), Polysilazan (Si-N) oder Polybarosilazan (Si-B-C-N) hergestellt werden.

Ebenso kann das zweite Element metallisch sein wie zum Beispiel aus Titan (Ti) bestehend.

Für eine Faser 1 sind damit beispielsweise folgende Kombinationen möglich:
- Kern 7 aus Organik -: Hülle 4 aus Metall,
- Kern 7 aus Organik -: Hülle 4 aus Metalloxid oder Nichtmetalloxid bzw. Keramik,
- Kern 7 aus Organik -: Hülle 4 aus Organik, insbesondere Si-O-C
- Kern 7 aus Organik -: Hülle 4 aus Glas,
- Kern 7 aus Metall -: Hülle 4 aus Metall,
- Kern 7 aus Metall -: Hülle 4 aus Metalloxid oder Nichtmetalloxid bzw. Keramik,
- Kern 7 aus Metall -: Hülle 4 aus Organik, insbesondere Si-O-C
- Kern 7 aus Metall -: Hülle 4 aus Glas,
- Kern 7 aus Keramik/Oxid -: Hülle 4 aus Metall,
- Kern 7 aus Keramik/Oxid -: Hülle 4 aus Oxid/Keramik,
- Kern 7 aus Keramik/Oxid: Hülle 4 aus Organik, insbesondere Si-O-C
- Kern 7 aus Keramik/Oxid -: Hülle 4 aus Glas,
- Kern 7 aus Glas -: Hülle 4 aus Metall,
- Kern 7 aus Glas -: Hülle 4 aus Oxid/Keramik,
- Kern 7 aus Glas -: Hülle 4 aus Organik, insbesondere Si-O-C
- Kern 7 aus Glas -: Hülle 4 aus Glas.

Die Materialien vom Kern 7 und Hülle sind aber verschieden. Die Hülle 4 kann auch porös ausgebildet sein.

Die Hülle 4 kann vorzugsweise einen Gradienten in der Konzentration eines Bestandteils aufweisen. So wird der Kern 7 einer Faser 1 beispielsweise aus Aluminium gebildet und die Hülle 4 aus Platin, wobei die Konzentration des Platins ausgehend von der Oberfläche 25 des Kerns 7 bis zur äußeren Oberfläche 28 der Hülle 4 zunimmt.
Mehrschichtige Hüllen sind auch denkbar.
Die Schichtdicke beträgt beispielsweise bis zu 1/5 vorzugsweise bis zu 1/10 des Durchmessers des Kerns 7 und ist beispielsweise 10µm dick.

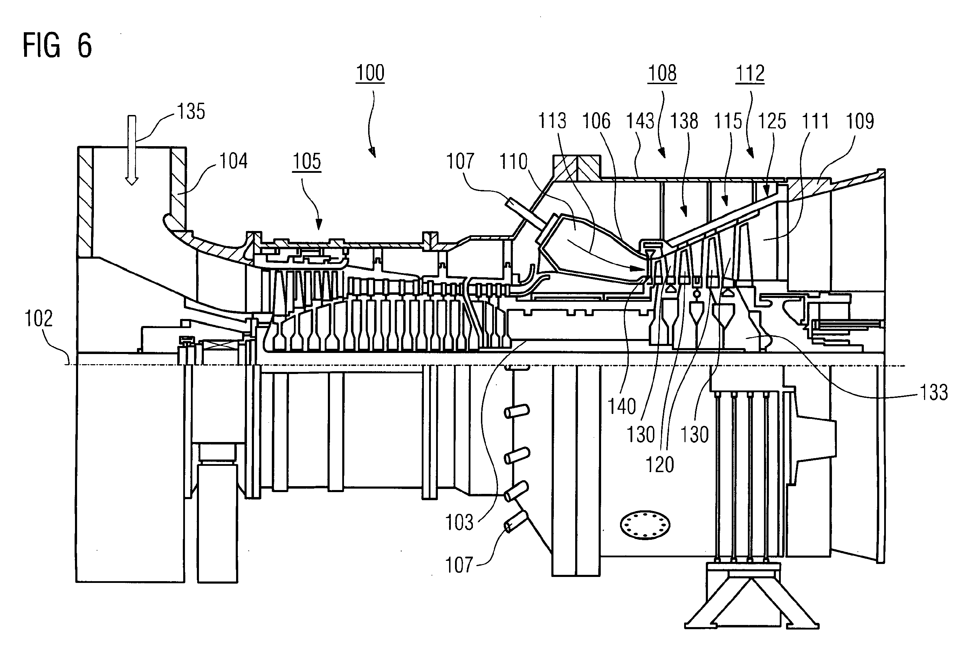

Figur 2 zeigt eine erfindungsgemäße Schicht 16.
Die Schicht 16 ist ein Teil eines Bauteils oder Schichtsystems 10, das aus einem Substrat 13 besteht, auf dem die Schicht 16 angeordnet ist.
Das Substrat 13 ist beispielsweise ein Bauteil für hohe Temperaturen, wie zum Beispiel bei Dampf- oder Gasturbinen 100 (Fig. 6), bestehend aus einer nickel-, kobalt- oder eisenbasierten Superlegierung.
Anwendung finden solche Schichtsysteme 10 bei Turbinenschaufeln 120, 130, Hitzeschildelementen 155 oder Gehäuseteilen 138.
Die Schicht 16 besteht aus einer Matrix aus einem Matrixmaterial in der die Fasern 1 homogen oder lokal (beispielsweise mit einem Gradienten) verteilt sind.
Dabei können auch Schichten 16 hergestellt und verwendet werden, wobei die Faser 1 in einer oder mehreren Teilschichten oder Randschichten vorhanden sind. Die Fasern 1 können mit fast jedem Beschichtungsverfahren zusammen aufgebracht werden, also mittels thermischen Plasmaspritzens (APS, VPS, LPPS), Kaltgasspritzens, HVOF oder eines elektrolytischen Beschichtungsverfahren.
Die Matrix der Schicht 16 kann metallisch oder keramisch sein.
Beispielsweise ist die Schicht 16 eine Legierung des Typs MCrA1X und die Fasern 1 bestehen aus einem Kern 7 aus Aluminium. Die Fasern 1 können in der ganzen Schicht 16 verteilt sein oder lokal konzentriert nahe der äußeren Oberfläche 22 der Schicht 16 angeordnet sein.
Wie schon weiter oben beschrieben ergibt sich die Schutzfunktion der MCrAlX-Legierung dadurch, dass das Aluminium Aluminiumoxid bildet, dabei sich aber in dem Matrixmaterial verbraucht.
Das Aluminium aus den Fasern 1 weist im Material der Hülle 4 beispielsweise einen geringeren Diffusionskoeffizienten bei Einsatztemperaturen auf als das Aluminium in der Matrix der Schicht 16, also hier in der MCrA1X-Legierung.
Bei hohen Temperaturen diffundiert das Aluminium langsam durch die Hülle 4, insbesondere aus Si-O-C, in die Matrix der Schicht 16 und füllt so in dem Matrixmaterial das durch die Oxidation verbrauchte Aluminium wieder auf, so dass sich die ursprüngliche Zusammensetzung der MCrAIX-Legierung kaum verändert, bis sich kein Aluminium mehr in der Faser 1 befindet.
Damit wird erreicht, dass sich die Lebensdauer der Schutzschicht 16 erheblich verlängert.

Ebenso ist vorstellbar, dass sich die Hülle 4 durch Diffusion in der Kristallstruktur des Matrixmaterial der Schicht 16 zumindest teilweise auflöst und dabei gegebenenfalls Ausscheidungen in dem Matrixmaterial bildet und so erst nach einer gewissen Zeit eine Diffusion des Materials des Kerns 7 in die Matrix ermöglicht, da anfangs die Schutzfunktion beispielsweise der MCrAlX-Schicht noch gegeben ist.
Dabei weist das zweite Element der Hülle 4 in dem Matrixmaterial beispielsweise einen höheren Diffusionskoeffizienten auf als im ersten Element oder in der ersten Verbindung.

Die Hülle 4 kann auch abrasiv und/oder thermisch und/oder chemisch aufgelöst werden, sodass der Kern 7 dadurch freigelegt wird.

Ebenso kann ein örtlicher Konzentrationsgradient der Fasern 1 innerhalb der Schicht 16 oder auch innerhalb des Substrats 13 vorhanden sein. So nimmt beispielsweise die Konzentration der Fasern 1 ausgehend von einer Oberfläche 31 des Substrats 13 zu einer Oberfläche 34 der Schicht 16 zu.

Ebenso kann die Schicht 16 eine Schutzschicht gegen Korrosion und/oder Erosion einer Kompressorschaufel darstellen, wobei die Fasern in einer Schicht 16 mit der chemischen Zusammensetzung gemäß des Patents EP 0 142 418 B1 dazu führen, können, dass über ein deutlich längeren Zeitraum genügend Opfermaterial zur Verfügung gestellt wird, damit sich die gewünschte Schutzfunktion ergibt.
Dabei ist das erste Element, insbesondere Aluminium, von einer Hülle 4 aus einem Binder, Si-O-C oder einem Polymer umgeben.

Beim Verdichten von Luft im Verdichter kann Wasser ausfallen, das unter Umständen in Verbindung mit anderen in der Luft enthaltenen Elementen einen Elektrolyten bildet, welches zu Korrosion und Erosion an den Verdichterschaufeln führen kann. Um die Korrosion und/oder Erosion zu verhindern, werden Verdichterschaufeln daher in der Regel mit Beschichtungen versehen. Hierbei kommen insbesondere Beschichtungen in Betracht, die eine beispielsweise phosphatgebundene Grundmatrix mit darin dispersiv verteilten Metallpartikeln wie etwa Aluminiumpartikel umfassen. Die Schutzwirkung einer derartigen Beschichtung besteht darin, dass die in der Grundbeschichtung eingebetteten Metallpartikel zusammen mit dem (edleren) Metall der Verdichterschaufel und dem Elektrolyten eine galvanische Zelle bilden, in welcher die Metallpartikel sog. Opfer-Anoden bilden. Die Oxidation bzw. die Korrosion findet dann in den Opfer-Anoden statt, d.h. in den Metallpartikeln und nicht im Metall der Verdichterschaufel.

Die phosphatgebundene Grundmatrix der Beschichtung hat glaskeramische Eigenschaften, ist thermisch stabil, ebenfalls korrosionsbeständig und schützt gegen mechanische Einwirkungen, etwa Abrasion und Erosion.

Neben den Fasern 1 kann die Beschichtung weitere Partikel als Füllstoffe enthalten. Beispielhaft seien an dieser Stelle Farbstoffpartikel genannt.

Neben phosphatgebundenen Beschichtungen kommen weitere Arten von Beschichtungen in Betracht. Die EP 0 142 418 B1, die EP 0 905 279 A1 und die EP 0 995 816 A1 beschreiben Beschichtungen auf Chromat/Phosphat-Basis. Die EP 1 096 040 A2 beschreibt eine Beschichtung auf Phosphat/Borat-Basis und die EP 0 933 446 B1 beschreibt eine Beschichtung auf Phosphat/Permanganat-Basis.

Die Fasern 1 erhöhen die mechanische Festigkeit der Schicht 16. Insbesondere der Aufbau der Faser 1 aus Kern 7 und Hülle 4 erhöht die Steifigkeit der Faser 1, sodass solche Fasern 1 auch eingesetzt werden, ohne dass ein sich verbrauchendes Element der Matrix durch die Faser 1, "aufgefüllt" wird.
Die Faser 1 kann also zwei Funktionen erfüllen: 1. Erhöhung der Festigkeit, 2. Reservoir an einem Element für die Matrix.

Figur 3 zeigt ein weiteres Anwendungsbeispiel der erfindungsgemäßen Schicht 16.
Das Schichtsystem 10 besteht aus einem Substrat 13, einer erfindungsgemäßen Schicht 16 mit einer weiteren Schicht 19 auf der erfindungsgemäßen Schicht 16.
Dies ist beispielsweise ein Schichtsystem 10 für Hochtemperaturanwendungen wobei das Substrat 13 wieder eine Superlegierung wie oben beschrieben darstellt und die Schicht 16 eine Matrix des Typs MCrAlX aufweist. Dann stellt die Schicht 19 eine keramische Wärmedämmschicht dar, wobei sich zwischen der Schicht 16 und der Schicht 19 die schützende Aluminiumoxid-Schicht (TGO) bildet. Die erfindungsgemäßen Fasern 1 sind beispielsweise nahe der Grenzfläche zwischen den Schichten 16 und 19 konzentriert.

Ebenso kann man sich ein Bauteil aus einem Material vorstellen, das die Fasern 1 aufweist, d.h. sie sind nicht in einer Beschichtung vorhanden, sondern in einem massiven Material.

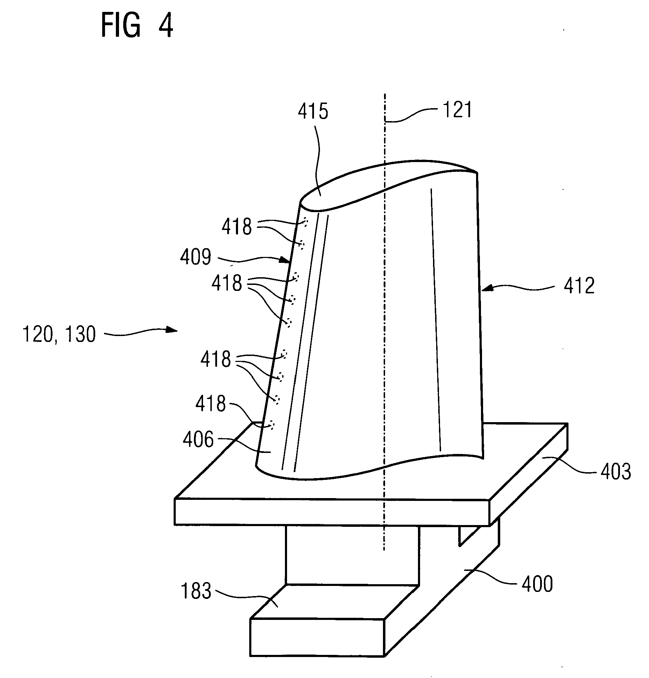

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1306454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweit genannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

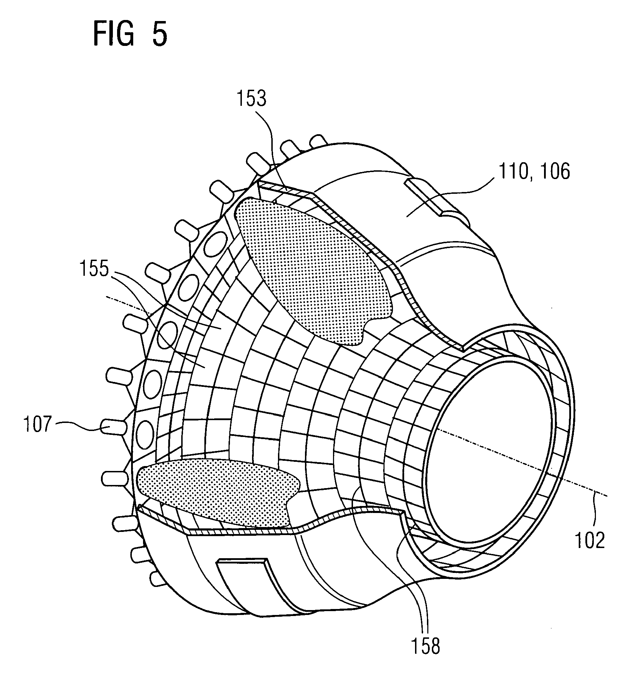

Die Figur 5 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrA1X und/oder keramischen Beschichtungen sein.
Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Matrix für ein Bauteil (10, 120, 130, 138, 155) oder eine Schicht (16, 19),
bestehend aus einem Matrixmaterial,
die eine Faser (1) aufweist,
**dadurch gekennzeichnet, dass**
die Faser (1) aus
einem Kern (7),
bestehend aus einem ersten chemischen Element oder einer ersten Verbindung und
einer Hülle (4),
bestehend aus einem zweiten chemischen Element oder zweiten Verbindung
besteht.

2. Matrix nach Anspruch 1,
**dadurch gekennzeichnet, dass**
das erste Element oder ein Element der ersten Verbindung im zweiten Element oder in der zweiten Verbindung einen um mindestens 5%, insbesondere mindestens 10% geringeren Diffusionskoeffizienten aufweist als das erste Element oder als ein chemisches Element der ersten Verbindung im Matrixmaterial.

3. Matrix nach Anspruch 1 oder 7,
**dadurch gekennzeichnet,**
**dass** das erste Element ein Element des Matrixmaterials ist oder
**dass** die erste Verbindung dem Matrixmaterial entspricht.

4. Matrix nach Anspruch 1, 2 oder 3,
**dadurch gekennzeichnet, dass**
der Kern (7) keramisch ist.

5. Matrix nach Anspruch 1, 2 oder 3,
**dadurch gekennzeichnet, dass**
der Kern (7) metallisch ist.

6. Matrix nach Anspruch 1, 2 oder 3,
**dadurch gekennzeichnet, dass**
der Kern (7) organisch, insbesondere aus Si-O-C ist.

7. Matrix nach Anspruch 1, 2, 3 oder 5,
**dadurch gekennzeichnet, dass**
das erste Element Aluminium und/oder Chrom ist.

8. Matrix nach Anspruch 1, 2, 3 oder 5,
**dadurch gekennzeichnet, dass**
das erste Element Aluminium ist.

9. Matrix nach Anspruch 1, 2, 3 oder 5,
**dadurch gekennzeichnet, dass**
die erste Verbindung eine Aluminium-Chrom-, eine Nickel-Aluminium-Legierung oder ein Aluminid ist.

10. Matrix nach Anspruch 1 oder 2,
**dadurch gekennzeichnet, dass**
das zweite Element oder die zweite Verbindung metallisch ist.

11. Matrix nach Anspruch 1 oder 2,
**dadurch gekennzeichnet, dass**
die zweite Verbindung aus einem Glas besteht.

12. Matrix nach Anspruch 1 oder 2,
**dadurch gekennzeichnet, dass**
die zweite Verbindung keramisch, insbesondere ein Metalloxid ist.

13. Matrix nach Anspruch 1, 2 oder 12,
**dadurch gekennzeichnet, dass**
die zweite Verbindung Aluminiumoxid (Al₂O₃) und/oder Chromoxid (Cr₂O₃) ist.

14. Matrix nach Anspruch 1, 2 oder 10,
**dadurch gekennzeichnet, dass**
das zweite Element Titan, Platin, Yttrium oder Rhenium ist.

15. Matrix nach Anspruch 1 oder 2,
**dadurch gekennzeichnet, dass**
die zweite Verbindung organisch, insbesondere aus Si-O-C ist.

16. Matrix nach Anspruch 1,
**dadurch gekennzeichnet, dass**
die Faser (1) eine Kurzfaser ist.

17. Matrix nach Anspruch 1,
**dadurch gekennzeichnet, dass**
die Faser (1) eine Langfaser ist.

18. Matrix nach Anspruch 1 oder 17,
**dadurch gekennzeichnet, dass**
die Matrix Fasermatten aus Fasern (1) enthält.

19. Matrix nach Anspruch 1,
**dadurch gekennzeichnet, dass**
die Hülle (4) porös ist.

20. Matrix nach Anspruch 1,
**dadurch gekennzeichnet, dass**
das Matrixmaterial keramisch ist.

21. Matrix nach Anspruch 1,
**dadurch gekennzeichnet, dass**
das Matrixmaterial metallisch ist.

22. Matrix nach Anspruch 1 oder 21,
**dadurch gekennzeichnet, dass**
das Matrixmaterial eine Legierung des Typs MCrAlX ist.

23. Matrix nach Anspruch 1, 10, 11, 12, 13, 14, 15, 20 oder 21,
**dadurch gekennzeichnet, dass**
das zweite Element oder ein Element der zweiten Verbindung in der Kristallstruktur des Matrixmaterials lösbar ist oder zur Ausbildung von Ausscheidungen in dem Matrixmaterial geeignet ist,
sodass sich die Hülle (4) zumindest teilweise auflösen kann.

24. Matrix nach Anspruch 1, 19 oder 23,
**dadurch gekennzeichnet,**
**dass** die Hülle (4) den Kern (7) umschließt und
**dass** der Durchmesser des Kerns (7) ≤ 500nm ist.

25. Schichtsystem,
das zumindest eine Schicht (16) mit einer Matrix gemäß einem oder mehreren der Ansprüche 1 bis 24 enthält,
die auf einem Substrat (13) angeordnet ist.

26. Schichtsystem nach Anspruch 25,
**dadurch gekennzeichnet, dass**
auf der Schicht (16) eine weitere Schicht (19) angeordnet ist.

27. Schichtsystem nach Anspruch 25,
**dadurch gekennzeichnet, dass**
die Schicht (16) einen Gradienten in der Konzentration an Fasern (1) aufweist.

28. Schichtsystem nach Anspruch 25,
**dadurch gekennzeichnet, dass**
das Substrat (13) eine Matrix gemäß einem oder mehreren der Ansprüche 1 bis 24 aufweist.

29. Schichtsystem nach Anspruch 25 oder 28,
**dadurch gekennzeichnet, dass**
das Substrat (13) eine kobalt-, nickel- oder eisenbasierte Superlegierung ist,
auf der insbesondere eine Schicht (16) mit einer Matrix aus MCrA1X aufgebracht ist,
auf der insbesondere eine keramische Wärmedämmschicht, insbesondere bestehend aus dem Material Zirkonoxid, vorhanden ist.

30. Schichtsystem nach Anspruch 25 oder 29,
**dadurch gekennzeichnet, dass**
das Schichtsystem (10) für ein Bauteil, insbesondere für eine Turbinenschaufel (120, 130), ein Hitzeschildelement (155) oder ein Gehäuseteil einer Turbine, insbesondere einer Gas- (100) oder Dampfturbine verwendet wird.

31. Schichtsystem nach Anspruch 25,
**dadurch gekennzeichnet, dass**
das Schichtsystem (10) für eine Kompressorschaufel, insbesondere einer Gasturbine (100), verwendet wird.
